# EUROPÄISCHE PATENTSCHRIFT

(11) **EP 4 498 145 B1**
(45) Veröffentlichungstag und Bekanntmachung des Hinweises auf die Patenterteilung: **11.03.2026**
(21) Anmeldenummer: 24191010.8
(22) Anmeldetag: 25.07.2024
(51) Int. Cl.: G02B 26/08, G02F 1/29

(54) **REFLEKTIVES OPTISCHES SYSTEM MIT VERSTELLBARER EFFEKTIVER BRENNWEITE SOWIE OPTISCHER AUFBAU**
REFLECTIVE OPTICAL SYSTEM WITH ADJUSTABLE EFFECTIVE FOCAL LENGTH AND OPTICAL ASSEMBLY
SYSTÈME OPTIQUE RÉFLÉCHISSANT À DISTANCE FOCALE EFFECTIVE RÉGLABLE ET STRUCTURE OPTIQUE

(30) Priorität: 27.07.2023 DE 102023120069
(43) Veröffentlichungstag der Anmeldung: 29.01.2025
(73) Patentinhaber: Fraunhofer-Gesellschaft zur Förderung der angewandten Forschung e.V., 80686 München (DE)
(72) Erfinder: ZETTLITZER, Lucas, 07745 Jena (DE); RISSE, Stefan, 07745 Jena (DE)
(74) Vertreter: Pfenning, Meinig & Partner mbB

(56) Entgegenhaltungen:
- BE-A- 896 293
- JP-A- 2016 161 595
- KR-A- 20230 003 062
- US-A1- 2023 146 283

## Beschreibung

Die Erfindung betrifft ein reflektives optisches System mit verstellbarer effektiver Brennweite, die Verwendung eines solchen reflektiven optischen Systems, sowie ein Verfahren zur Berechnung der Spiegelflächen für ein solches optischen Systems.

Optische Systeme mit verstellbarer Brennweite können sowohl in Beleuchtungs- als auch abbildenden Systemen genutzt werden. Ersteres ermöglicht die Anwendung der Lösung für Strahlformungsaufgaben beispielsweise für die Formung von Laserstrahlen in der Laser-Materialbearbeitung. In abbildenden optischen Systemen können optische Systeme mit verstellbarer Brennweite so angewandt werden, dass mindestens zwei verschiedene Objektfelder in zwei Zuständen auf eine gemeinsame, feststehende Bildebene abgebildet werden.

Im Stand der Technik sind insbesondere refraktive optische Systeme mit verstellbarer Brennweite bekannt. Die Druckschriften US 3 507 565 A und US 3 305 294 A beschreiben beispielsweise Linsensysteme mit einer variablen Brennweite. Bei diesen Lösungen bestehend aus einem Linsenpaar, wird durch eine gegensätzliche laterale, aber betragsgleiche, Bewegung eine Variation der Brennweite erreicht.

Refraktive Systeme weisen jedoch eine niedrige Transmission, hohe chromatische Abhängigkeit der Aberrationen sowie physikalische Begrenzung der Oberflächenkomplexität beispielsweise durch interne Totalreflexionen auf.

Die Druckschrift DE 10 201008 342 A1 beschreibt ein Abbildungssystem zum Abbilden eines Objekts auf einen Bildsensor, welches eine dem Objekt zugewandte Frontseite sowie eine vom Objekt abgewandte Rückseite aufweist, die vom Objekt aus betrachtet hinter der Frontseite angeordnet ist. Weiterhin weist das Abbildungssystem eine Lichteintritts-Einrichtung an der Frontseite auf, durch welche vom Objekt kommendes Licht in das Abbildungssystem eintreten kann. Das Licht durchläuft dabei den Strahlengang zwischen Objekt und Bildsensor. Ebenfalls werden ein erstes und ein zweites optisches Element beschrieben, welche derart an der Rückseite angeordnet sind, dass sie den Strahlengang beeinflussen können. Die Lichteintritts-Einrichtung weist ein elektrisch schaltbares Flüssigkristall-Element auf, welches den Strahlengang je nach elektrischem Schaltungszustand unter mindestens einem ersten Winkel und einem zweiten, vom ersten unterschiedlichen Winkel ablenkt. Durch diese elektrisch bewirkte Änderung des Strahlengangs wird eine diskret schaltbare Brennweitenänderung realisiert.

Die Druckschrift US 2018/0164573 A1 offenbart ein Anastigmat-Teleskop mit drei asphärischen Spiegeln, das Mittel zum linearen Bewegen des dritten Spiegels entlang der optischen Achse des Teleskops aufweist, um die Brennweite des Teleskops auf eine Vielzahl von Brennweiten zwischen mindestens einer minimalen Brennweite und einer maximalen Brennweite zu ändern.

Außerdem beschreibt die Druckschrift US 2015/0234153 A1 eine reflektierende Varifokallinse, die dazu konfiguriert ist, eine Brennweite unter Verwendung eines elektrischen Signals zu ändern, wobei die Linse eine erste leitfähige Elektrodenschicht, eine auf der ersten Elektrodenschicht ausgebildete elektrisch aktive Polymerschicht, eine auf der elektrisch aktiven Polymerschicht ausgebildete zweite leitfähige Elektrodenschicht und eine reflektierende Schicht umfasst, die dazu konfiguriert ist, einfallendes Licht in Richtung der ersten Elektrodenschicht oder der zweiten Elektrodenschicht zu reflektieren, wobei eine Form der elektrisch aktiven Polymerschicht durch das an die erste Elektrodenschicht und die zweite Elektrodenschicht angelegte elektrische Signal geändert wird, und wenn sich die Form der elektrisch aktiven Polymerschicht ändert, ändert sich eine Form der reflektierenden Schicht, wodurch eine Brennweite eines reflektierten Lichts geändert wird.

Die Druckschrift KR 2023 0003062 A offenbart ein optisches System zur Laserbearbeitung, das eine einfachere und zuverlässigere Bearbeitung mehrerer Muster gleichzeitig auf demselben Teil ermöglicht. Das System der umfasst eine Ultrakurzpulslaserquelle zum Erzeugen eines Quellenlaserstrahls; eine Vorrichtung mit Trennmitteln zum Trennen eines Quellenlaserstrahls in eine Vielzahl von getrennten Laserstrahlen, so dass jeder der getrennten Laserstrahlen in eine dafür spezifische Ausbreitungsrichtung gerichtet ist; eine Raumversatzeinheit zum Erhalten einer Vielzahl von versetzten Laserstrahlen aus der Vielzahl von getrennten Laserstrahlen, so dass jeder versetzte Laserstrahl sich um eine dafür spezifische Hauptausbreitungsachse ausbreiten kann und eine Bewegung um die Hauptausbreitungsachse beschreiben kann; sowie Fokussiermittel, die konfiguriert sind, jeden versetzten Laserstrahl auf ein Werkstück in der Richtung der dafür spezifischen Ausbreitungsachse zu fokussieren.

Aufgabe der Erfindung ist es daher, ein optisches System bereitzustellen, das die Nachteile derartiger Systeme im Stand der Technik beseitigt und geringe chromatische Aberrationen ermöglicht.

Diese Aufgabe wird durch das reflektive optische System mit den Merkmalen des Anspruchs 1 und einen optischen Aufbau mit den Merkmalen des Anspruchs 13 gelöst. Die Merkmale der abhängigen Ansprüche zeigen erfindungsgemäße Weiterbildungen auf.

Das Konzept einstellbarer effektiver Brennweiten wird auf eine reflektive Anwendung überführt, welche neben einer kontinuierlichen auch eine diskret einstellbare Brennweite ermöglicht.

Erfindungsgemäß wird ein reflektives optisches System mit verstellbarer effektiver Brennweite vorgeschlagen. Das reflektive optische System weist zumindest zwei verschiebbare Spiegelflächen auf, die außeraxial und nacheinander entlang eines Strahlengangs des optischen Systems angeordnet sind. Die verschiebbaren Spiegelflächen sind jeweils von einer ersten Verschiebeposition, nachfolgend auch lediglich als erste Position bezeichnet, in mindestens eine zweite Verschiebeposition, nachfolgend auch als zweite Position bezeichnet, verschiebbar.

In der ersten Position sind jeweils erste Funktionsbereiche der verschiebbaren Spiegelflächen im Strahlengang angeordnet. Die ersten Funktionsbereiche sind erfindungsgemäß derart ausgebildet, dass sie gemeinsam eine erste endliche Brennweite bewirken.

In der zweiten Position sind jeweils zweite Funktionsbereiche der verschiebbaren Spiegelflächen im Strahlengang angeordnet. Die zweiten Funktionsbereiche sind derart ausgebildet, dass sie gemeinsam eine zweite, abweichende, endliche Brennweite bewirken. Dadurch unterscheidet sich die effektive Brennweite des optischen Systems mit den verschiebbaren Spiegelflächen in der ersten Position von der effektiven Brennweite des optischen Systems mit den verschiebbaren Spiegelflächen in der zweiten Position.

Die Spiegelflächen sind erfindungsgemäß in jeder Position derart angeordnet, dass objekt- und bildseitige Abschnitte der optischen Achse des optischen Systems unabhängig von der Position feststehen. Das bedeutet, dass die Strahllage am Eingang und Ausgang des optischen Systems unabhängig von der Position der Spiegel konstant ist. Mit anderen Worten weist das optische System genau einen Ein-/Ausgangskanal auf, durch den abzubildende Lichtstrahlen ein-/austreten können. Die Position der objekt- und bildseitigen Abschnitte der optischen Achse des optischen Systems werden durch eine Verschiebung der verschiebbaren Spiegelflächen von der ersten Position in die zweite Position im Ergebnis nicht verändert.

Dies kann beispielsweise dadurch erreicht werden, dass eine veränderte Strahllage, die innerhalb des optischen Systems durch eine Verschiebung und/oder Verkippung einer der verschiebbaren Spiegelflächen auftritt, durch eine geeignete Verschiebung und/oder Verkippung der anderen verschiebbaren Spiegelfläche kompensiert wird. Es ist ebenso möglich jeden der verschiebbaren Spiegel derart zu verschieben, dass sich die Strahllage auch innerhalb des optischen Systems nicht ändert.

Das erfindungsgemäße optische System kann insbesondere derart ausgebildet sein, dass es eine Vielzahl von Positionen aufweist. Die Spiegelflächen können insbesondere derart ausgebildet sein, dass sie eine ebenso diskrete oder kontinuierliche Einstellbarkeit der effektiven Brennweiten ermöglichen.

Die Anwendung ist dabei nicht auf bestimmte Wellenlängenbereiche begrenzt und ermöglicht konzeptionell eine Anwendung vom UV- bis in den IR-Wellenlängenbereich. Eine Anwendung kann dabei sowohl für terrestrische als auch für extraterrestrische Anwendungen erfolgen. Auch eine Anwendung in einfachen Mikroskop-Optiken ist für die Abbildung mit unterschiedlichen Brennweiten als kontinuierlich oder diskretes System erfindungsgemäß denkbar. Im Vergleich zum Stand der Technik stellt die vorgestellte Lösung nicht das vollständige Teleskop dar, sondern kann entsprechend mit verschiedenen Arten von Teleskopen gekoppelt werden. Allgemein ist auch eine unabhängige Anwendung der strahlformenden Baugruppe ohne zusätzliche Teleskope denkbar. Dabei ist die Anordnung als Relay-System, als auch nachgelagert zum Teleskop möglich.

In einer vorteilhaften Ausgestaltung des optischen Systems, sind verschiebbaren Spiegelflächen, deren Funktionsbereiche gemeinsam eine Brennweite bewirken, vorzugsweise gemeinsam auf einem einzigen Substrat angeordnet sind, wobei das Substrat gegenüber dem Strahlengang verschiebbar ist.

In einer weiteren vorteilhaften Ausgestaltung des optischen Systems sind die Spiegelflächen derart geformt und angeordnet, dass zwei Lichtstrahlen, die durch einen von dem objektseitigen Abschnitt der optischen Achse beabstandeten Objektpunkt in einer Objektebene verlaufen, und unmittelbar anschließend durch das optische System mit Spiegelflächen in der ersten Position verlaufen, einen Schnittpunkt in einem ersten Bildpunkt in einer Bildebene aufweisen; und zwei Lichtstrahlen, die durch den gleichen von dem objektseitigen Abschnitt der optischen Achse beabstandeten Objektpunkt in der Objektebene verlaufen, und unmittelbar anschließend durch das optische System mit Spiegelflächen in der zweiten Position verlaufen, einen Schnittpunkt in einem zweiten Bildpunkt in der Bildebene aufweisen. Mit anderen Worten, sind die verschiebbaren Spiegelflächen und deren Funktionsbereiche derart ausgebildet und angeordnet, dass ein Objekt, das in einer Objektebene angeordnet ist auf eine einzige Bildebene abgebildet wird. Dabei unterscheidet sich der Vergrößerungsfaktor einer Abbildung, die durch das optische System mit Spiegelflächen in der ersten Position bewirkt wird, von dem Vergrößerungsfaktor der Abbildung, die durch das optische System mit Spiegelflächen in der zweiten Position bewirkt wird.

In einer besonders vorteilhaften Ausgestaltung des optischen Systems, weist das System vier oder mehr, vorteilhafterweise eine geradzahlige Anzahl, verschiebbare Spiegelflächen auf. Die größere Anzahl an verschiebbaren Spiegelflächen mit jeweils zumindest zwei Funktionsbereichen, ermöglicht dabei mehrere endliche Brennweiten, die durch die Funktionsbereiche, die im Strahlengang angeordnet sind, bewirkt werden, gezielt aufeinander abzustimmen. Dabei können insbesondere die Brennweiten, die in den unterschiedlichen Positionen bewirkt werden, derart aufeinander abgestimmt werden, dass Objekt- und Bildebene bei unterschiedlichem Vergrößerungsfaktor feststehen. Ein derartiger Aufbau kann daher beispielsweise die Realisierung der oben beschriebenen feststehenden Objekt- und Bildebenen bei unterschiedlicher Vergrößerung vereinfachen. Dabei können die erste und die vierte verschiebbare Spiegelfläche gemeinsam auf einem ersten Substrat angeordnet sein. Unabhängig davon können die zweite und die dritte verschiebbare Spiegelfläche gemeinsam auf einem zweiten Substrat angeordnet sein. Zudem kann in einem solchen Aufbau eine Strahlumlenkeinheit vorgesehen sein. Unter einer Strahlumlenkeinheit kann jedes Element angesehen werden, dass einen Lichtstrahl um einen bestimmten Winkel ablenkt. Insbesondere vorteilhaft sind Strahlumlenkeinheiten, die als Retroreflektor ausgebildet sind und den Lichtstrahl um 180° umlenken können.

Vorzugsweise sind die erste verschiebbare Spiegelfläche, die zweite verschiebbare Spiegelfläche, die Strahlumlenkeinheit, die dritte verschiebbare Spiegelfläche und die vierte verschiebbare Spiegelfläche nacheinander im Strahlengang angeordnet. Die Spiegelflächen sind derart ausgestaltet, dass die erste und die vierte verschiebbare Spiegelfläche Funktionsbereiche aufweisen, die jeweils gemeinsam bestimmte Brennweiten bewirken, und die zweite und die dritte verschiebbare Spiegelfläche Funktionsbereiche aufweisen, die jeweils gemeinsam bestimmte Brennweiten bewirken.

In besonders vorteilhaften Ausgestaltungen der Erfindung schließt zumindest eine, vorzugsweise zwei, besonders bevorzugt jede der verschiebbaren Spiegelfläche einen Winkel von 45° mit der optischen Achse ein. Dies kann insbesondere bedeuten, dass die Scheitel der verschiebbaren Spiegelflächen einen Winkel von 45° mit der optischen Achse einschließen. Es ist ganz besonders vorteilhaft, wenn der Strahlengang durch Reflektion an den Spiegelflächen um 45° umgelenkt wird.

In weiteren vorteilhaften Ausgestaltungen der Erfindung, weist das optische System einen Verschiebeweg auf, entlang dem eine verschiebbare Spiegelfläche von der ersten in die zweite Position verschiebbar ist. Der Verschiebeweg ist vorteilhafterweise linear, und verläuft vorzugsweise entlang einer Richtung, die innerhalb jener verschiebbaren Spiegelfläche liegt, die entlang dem Verschiebeweg verschiebbar ist, und/oder orthogonal zur optischen Achse ist. Dadurch kann auf besonders einfache Weise erreicht werden, dass sich die Strahllage durch eine Verschiebung der Spiegelflächen entlang des Verschiebewegs nicht verändert wird.

Es kann dabei insbesondere vorteilhaft sein, wenn Verschiebewege, entlang derer zwei verschiebbare Spiegelflächen, deren Funktionsfläche gemeinsam eine Brennweite bewirken, von der ersten in die zweite Position verschiebbar sind, gleichgerichtet und/oder betragsgleich sind.

In ganz besonders vorteilhaften Ausgestaltungen der Erfindung ist zumindest eine der Spiegelflächen als Freiform ausgeführt, die durch eine Basisbeschreibung mit Termen höherer Ordnung beschreibbar ist. Dabei kann die Basisbeschreibung insbesondere sphärisch, elliptisch, asphärisch, parabolisch oder hyperbolisch sein. Die Terme höherer Ordnung können vorteilhafterweise Zernike-Polynome sein. Die Freiform ist dabei insbesondere derart ausgestaltet, dass sie die oben beschriebenen Funktionsbereiche der Spiegelflächen bilden.

Die Herstellung von freigeformten Spiegeln ermöglicht zudem die exakte Referenzierung durch optische Subaperturen und mechanische Anlagestrukturen an der monolithischen Optik, welche in einem Arbeitsschritt mit der optischen Spiegelfläche gefertigt werden können und somit eine Justierung vereinfacht und mit hoher Genauigkeit ermöglicht.

In weiteren vorteilhaften Ausgestaltungen weist zumindest eine der Spiegelflächen eine Apertur auf, die als Referenz für eine Kontrolle der Position und Lage der Spiegelflächen zueinander nutzbar ist. Die Apertur kann als ein Bereich in der Freiform der Spiegelfläche ausgebildet sein. Vorteilhafterweise kann eine zusätzliche reflektive Fläche auf einer der Spiegelflächen integriert sein, wobei die zusätzliche reflektive Fläche die Aufgabe der Kontrolle zur Position und Lage übernimmt. Diese kann auch entsprechend in die Freiform integriert werden.

Es sind zudem Ausführungsformen der Erfindung möglich, in denen mindestens eine optische Referenz auf den optischen Komponenten, wie beispielsweise den Spiegelflächen oder den Substraten der Spiegelflächen, angeordnet sind. Außerdem können in vorteilhaften Ausgestaltungen der Erfindung mechanische Referenzen und/oder mechanische Anlagestrukturen in montierter oder angearbeiter Weise an zumindest einer der optischen Komponenten angeordnet sein.

In einer weiteren Ausgestaltung der Erfindung ist zumindest ein refraktives Element im Strahlengang des optischen Systems angeordnet. Dies kann insbesondere für Anwendungen mit einem eng begrenzten Wellenlängenbereich sinnvoll sein, in dem chromatische Aberrationen keine große Rolle spielen.

In besonders vorteilhaften Ausgestaltungen ist die Reflektivität der Spiegelflächen bei einer Wellenlänge, die größer oder gleich 900 nm ist, und/oder einer Wellenlänge, die zwischen 300 nm und 900 nm liegt, und/oder einer Wellenlänge, die kleiner oder gleich 300 nm ist, größer als 90 %, vorzugsweise größer als 95 %. Besonders vorteilhaft sind Ausführungsformen, in denen die Spiegelflächen Licht im sichtbaren Bereich, also bei Wellenlängen zwischen 400 nm und 800 nm, reflektieren. Vorteilhafterweise ist die Reflektivität der Spiegelflächen für Licht mit einer Wellenlänge in einem Wellenlängenbereich zwischen 400 nm und 800 nm größer als 50%, besonders vorteilhaft größer als 75 %, ganz besonders vorteilhaft größer als 90 %. Dabei kann die Reflektivität im gesamten Bereich zwischen 400 nm und 800 nm, oder auch nur in einem 5 nm, vorteilhafterweise 50 nm, besonders vorteilhaft 100 nm breiten Teilbereich zwischen 400 nm und 800 nm, größer als 50 %, besonders vorteilhaft größer als 75 %, ganz besonders vorteilhaft größer als 90 % sein.

Erfindungsgemäß wird ein optischer Aufbau vorgeschlagen, aufweisend ein zuvor beschriebenes optisches System und zumindest ein abbildendes optisches System, insbesondere eine Teleskop-Optik oder eine Mikroskop-Optik, wobei das optische System in das abbildende optische System integriert ist oder dem abbildenden optische System vor- oder nachgeschaltet ist. Durch Verschiebung der Spiegelflächen in die verschiedenen Verschiebpositionen, kann insbesondere der Vergrößerungsfaktor des Gesamtsystems verändert werden.

Erfindungsgemäß wird ebenso ein Verfahren zur Berechnung von Oberflächenformen der verschiebbaren Spiegelflächen für das optische System zuvor beschriebene optisches System mit zwei effektiven Brennweiten, aufweisend die Schritte:
- Festlegen eines Optimierungsparameters/-ziels (bspw. Wellenfrontkriterium, RMS Spotradius, MTF) für das System
- Festlegen der geometrischen Randbedingungen:
   ∘ Definieren von Abständen und Winkeln zwischen den Spiegelflächen, wobei die Abstände in Richtung des Strahlengangs als auch lateral zum Strahlengang definiert werden,
   ∘ Definieren des Verschiebewegs der verschiebbaren Spiegelflächen,

   - Definieren des Durchmessers der Spiegelflächen
- Festlegen der optischen Randbedingungen:
   ∘ Definieren von Anwendungswellenlänge(n)
   ∘ Festlegen der effektiven Brennweite und/oder erreichbaren Vergrößerungsfaktoren des optischen Systems und daraus folgende Definition von Objekt- und Bildfeld(-ern) sowie der Numerischen Aperturen für beide Konfigurationen,
      - Festlegen der Pupillenposition und -größe,
      - Festlegen der Basisbeschreibung und der zugehörigen Kerneigenschaften (bspw. Flächenkrümmung, Konische Konstante, Asphärische Koeffizienten),
   ∘ Festlegen der zu verwendenden mathematischen Beschreibung für die Freiformflächen,
   ∘ Festlegen der Power-Verteilung für die Spiegelflächen (konvergierend, divergierend)
   ∘ ggf. genauere Definition der relativen Flächenlage der Freiformen (bspw. der Flächenscheitelpunkte).

Ein solches Verfahren kann mit verfügbaren Optikdesign- und/oder Optimierungswerkzeugen durchgeführt werden. Selbstverständlich lässt sich das oben beschriebene Verfahren auf eine beliebige Anzahl von effektiven Brennweiten bzw. erreichbaren Vergrößerungen bei feststehender Objekt- und Bildebene erweitern.

Anhand der nachfolgenden Figuren und Beispiele soll der erfindungsgemäße Gegenstand näher erläutert ohne diesen auf die hierin gezeigten Ausführungsformen einschränken zu wollen.

Es zeigt:
- Figur 1: eine schematische Darstellung einer Ausführungsform eines erfindungsgemäßen optischen Systems in zwei Positionen.
- Figur 2: ein Substrat mit zwei Spiegelflächen eines erfindungsgemäßen optischen Systems.
- Figur 3: eine perspektivische Ansicht einer weiteren Ausführungsform des erfindungsgemäßen optischen Systems.
- Figur 4: die Ausführungsform des erfindungsgemäßen optischen Systems der Figur 3 in zwei Positionen.
- Figur 5: die Ausführungsform des erfindungsgemäßen optischen Systems der Figur 3 in Seitenansicht.
- Figur 6: eine schematische Darstellung einer weiteren Ausführungsform eines erfindungsgemäßen optischen Systems in zwei Positionen.

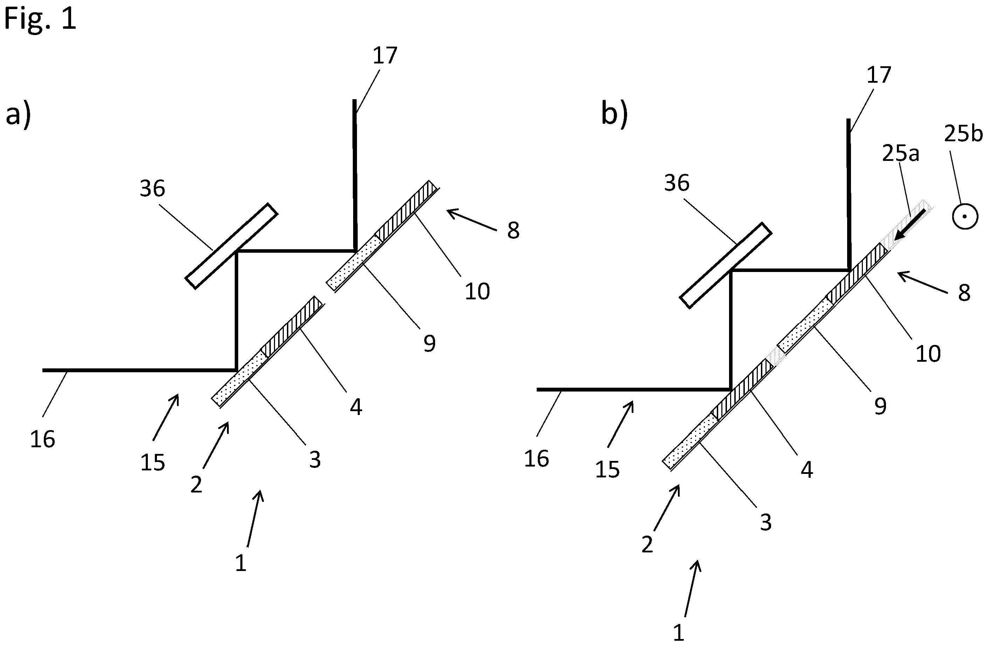

Figur 1 zeigt eine schematische Darstellung einer ersten Ausführungsform eines erfindungsgemäßen optischen Systems 1. Das optische System 1 weist eine erste verschiebbare Spiegelfläche 2 und eine zweite verschiebbare Spiegelfläche 8 auf. Beide Spiegelflächen 2, 8 schließen jeweils einen Winkel mit dem Strahlengang 15 ein und sind nacheinander entlang des Strahlengangs 15 angeordnet. Figur 1 zeigt das erfindungsgemäße optische System 1 in zwei verschiedenen Zuständen: In Figur 1a) befinden sich beide verschiebbaren Spiegelflächen 2, 8 jeweils in einer ersten Position. In Figur 1b) sind beide verschiebbaren Spiegelflächen 2, 8 jeweils in einer zweiten Position angeordnet.

Jede der verschiebbaren Spiegelflächen 2, 8 weist jeweils zwei Funktionsbereiche auf: Die erste verschiebbare Spiegelfläche 2 weist einen ersten Funktionsbereich 3 und einen zweiten Funktionsbereich 4 auf. Die zweite verschiebbare Spiegelfläche 8 weist einen ersten Funktionsbereich 9 und einen zweiten Funktionsbereich 10 auf.

Befindet sich die erste Spiegelfläche 2 in der ersten Position, so ist der erste Funktionsbereich 3 im Strahlengang 15 des optischen Systems angeordnet. Befindet sich die erste Spiegelfläche 2 in der zweiten Position, so ist der zweite Funktionsbereich 4 des ersten verschiebbaren Spiegels im Strahlengang 15 des optischen Systems angeordnet. Befindet sich die zweite Spiegelfläche 8 in der ersten Position, so ist der erste Funktionsbereich 9 der zweiten Spiegelfläche im Strahlengang 15 des optischen Systems angeordnet. In der zweiten Position der zweiten Spiegelfläche 8 ist der zweite Funktionsbereich 10 im Strahlengang 15 des optischen Systems angeordnet.

Die Funktionsbereiche der verschiebbaren Spiegelflächen sind jeweils derart ausgebildet, dass sie gemeinsam eine endliche Brennweite bewirken. Mit anderen Worten werden Lichtstrahlen, die parallel zur optischen Achse einfallen, anschließend vom ersten Funktionsbereich 3 der ersten verschiebbaren Spiegelfläche 2 reflektiert werden und anschließend vom ersten Funktionsbereich 9 der zweiten verschiebbaren Spiegelfläche 8 reflektiert werden, auf einen ersten Fokus der auf dem bildseitigen Abschnitt der optischen Achse liegt, fokussiert. Lichtstrahlen, die parallel zur optischen Achse einfallen, anschließend vom zweiten Funktionsbereich 4 der ersten verschiebbaren Spiegelfläche 2 reflektiert werden und anschließend vom zweiten Funktionsbereich 10 der zweiten verschiebbaren Spiegelfläche 8 reflektiert werden, werden auf einen zweiten Fokus der auf dem bildseitigen Abschnitt der optischen Achse liegt, fokussiert. Prinzipiell sind mehr als zwei Funktionsbereiche pro Spiegelfläche möglich, sodass mehr als zwei endliche Brennweiten bewirkbar sind.

Die verschiebbaren Spiegelflächen 2, 8 sind erfindungsgemäß von ihrer jeweils ersten Position in ihre jeweils zweite Position verschiebbar. Ein Verschiebeweg, also der Weg oder Pfad entlang dem eine der verschiebbaren Spiegelflächen von ihrer ersten Position in die zweite Position führbar ist, kann beispielsweise gerade sein. Es sind ebenfalls Ausführungsformen möglich, in denen die verschiebbaren Spiegelflächen 2, 8 jeweils in mehr als zwei Positionen oder auch kontinuierlich verschiebbar sind. Derartige weitere Positionen können beispielsweise an verschiedenen Stellen entlang des Verschiebewegs zwischen der ersten und zweiten Position angeordnet sein. Zumindest eine oder alle der verschiebbaren Spiegelflächen 2, 8 kann/können beispielsweise auf einer Linearführung oder einer Gelenkmechanik/Festkörpermechanik führbar sein.

Die Spiegelflächen sind erfindungsgemäß in jeder Position derart angeordnet, dass eine Strahllage am Eingang und Ausgang des optischen Systems unverändert bleibt. Das bedeutet, dass die Spiegelfläche in der ersten und der zweiten Position derart angeordnet sind, dass objekt-seitige Abschnitte der optischen Achse 16 und bild-seitige Abschnitte der optischen Achse 17 feststehen.

In der Ausführungsform der Figur 1 wird dies beispielsweise dadurch erreicht, dass die Spiegelflächen derart angeordnet sind, dass sowohl die Stelle im Strahlengang, an dem der Strahlengang auf eine verschiebbare Spiegelfläche bzw. einen der Funktionsbereich der Spiegelfläche trifft, als auch der Winkel, zwischen einfallendem und ausfallendem Strahlengang, in jeder Position jeweils gleich ist. Es sind auch Ausführungsformen denkbar, in denen von den zuvor beschriebenen Regeln abgewichen werden kann. Da erfindungsgemäß zwei verschiebbare Spiegelflächen vorgesehen sind, kann eine Lageabweichung, die durch eine Verschiebung oder auch eine Verkippung eines Spiegels erzeugt wird, durch eine entsprechende Verschiebung oder auch Verkippung des anderen Spiegels kompensiert werden.

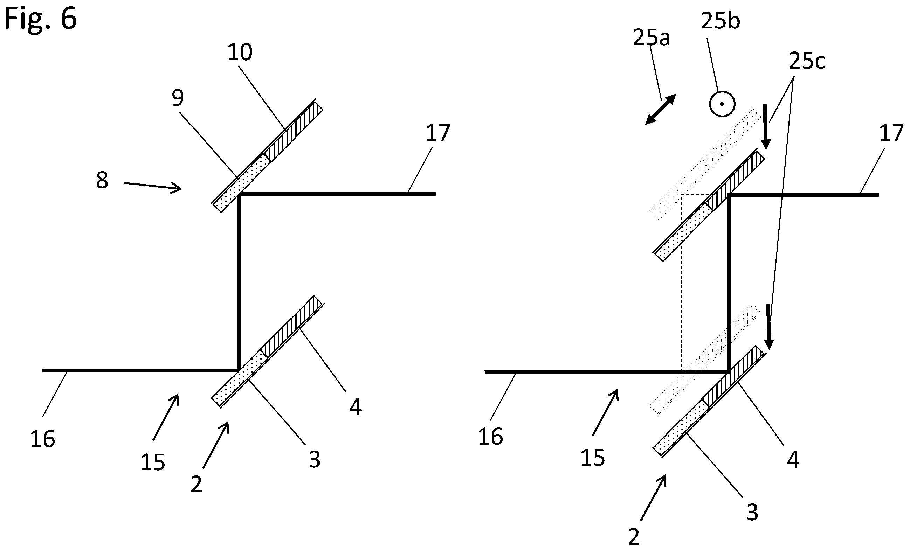

Es sind beispielsweise Ausführungsformen möglich, in denen sich die Stelle im Strahlengang, an dem eine verschiebbare Spiegelfläche angeordnet ist, zwischen erster und zweiter Position unterscheidet. Eine solche Ausführungsform ist beispielsweise in Figur 6 gezeigt. In dieser Ausführungsform kann der dadurch entstehende Versatz des Strahlengangs jedoch durch die zweite verschiebbare Spiegelfläche kompensiert werden.

Figur 1b zeigt beispielhaft eine erste Verschiebrichtung 25a, die die Richtung anzeigt, in der beide verschiebbaren Spiegelflächen 2, 8 von ihrer jeweils ersten in die jeweils zweite Position verschiebbar sein können. Alternativ oder ergänzend können die verschiebbaren Spiegelflächen auch in Richtung einer zweiten Verschieberichtung 25b verschiebbar sein. Die zweite Verschieberichtung steht in Figur 1b senkrecht auf der Zeichnungsebene. Die Verschieberichtung kann beispielsweise innerhalb der Spiegelebene, oder senkrecht zum Lot des Spiegelflächen erfolgen.

Ein erfindungsgemäßes optisches System kann neben den zumindest zwei verschiebbaren Spiegelflächen 2, 8 auch weitere Spiegelflächen oder andere optische Elemente aufweisen. Jede der weiteren Spiegelflächen oder jedes der anderen optischen Elemente kann dabei verschiebbar oder auch fest angeordnet sein. In der Ausführungsform der Figur 1 weist das optische System einen Umlenkspiegel 36 auf. Der Umlenkspiegel 36 ist unbeweglich angeordnet. Der Umlenkspiegel 36 ist im Strahlengang zwischen der ersten verschiebbaren Spiegelfläche 2 und zweiten verschiebbaren Spiegelfläche 8 angeordnet.

Zudem ist es möglich mehrere der oben beschriebenen Anordnungen, die jeweils zwei verschiebbare Spiegelflächen aufweisen, mit einander zu kombinieren. Beispielhaft ist nachfolgend eine Kombination von zwei Anordnungen mit jeweils zwei verschiebbaren Spiegelflächen dargestellt. Es ist zudem möglich, die oben beschriebene Anordnung mit einer beliebigen Anzahl verschiebbarer Spiegelflächen zu kombinieren.

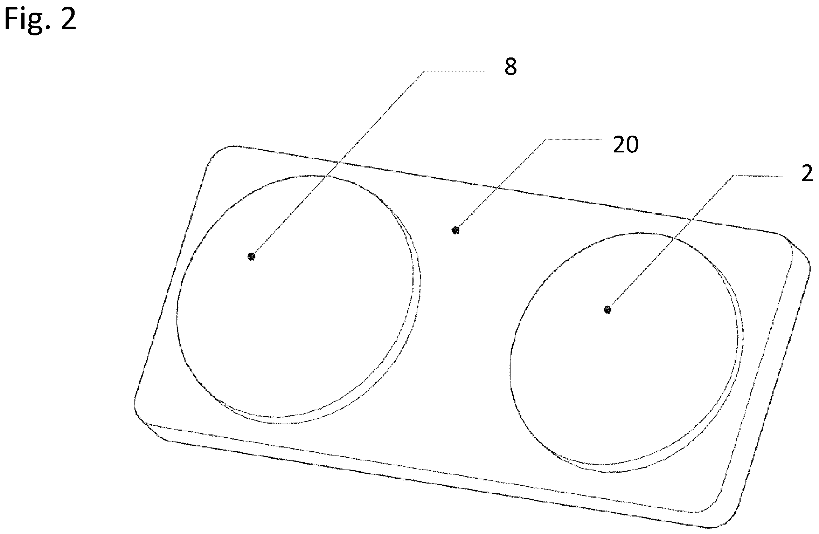

Figur 2 zeigt eine perspektivische Ansicht eines einzelnen Substrats 20, auf dem zwei verschiebbare Spiegelflächen 2, 8, deren Funktionsbereiche jeweils gemeinsam eine endliche Brennweite bewirken, angeordnet sind. Dadurch sind Bewegungen der beiden verschiebbaren Spiegelflächen 2, 8 zwangsläufig mechanisch miteinander gekoppelt. Insbesondere können die Funktionsbereiche derart innerhalb der verschiebbaren Spiegelflächen 2, 8 angeordnet sein, dass jeweils erste und zweite Funktionsbereiche der Spiegelflächen 2, 8 richtungs- und betragsgleich zueinander beabstandet sind. Dadurch kann beispielsweise sichergestellt werden, dass bei einer Verschiebung des Substrats jeweils erste Funktionsbereiche im Strahlengang angeordnet sind oder jeweils zweite Funktionsbereiche im Strahlengang angeordnet sind. Dies kann die optische Anordnung robuster gegenüber äußeren Störungen machen. Ebenso kann der Aufbau des Gesamtsystems einfacher gestaltet werden.

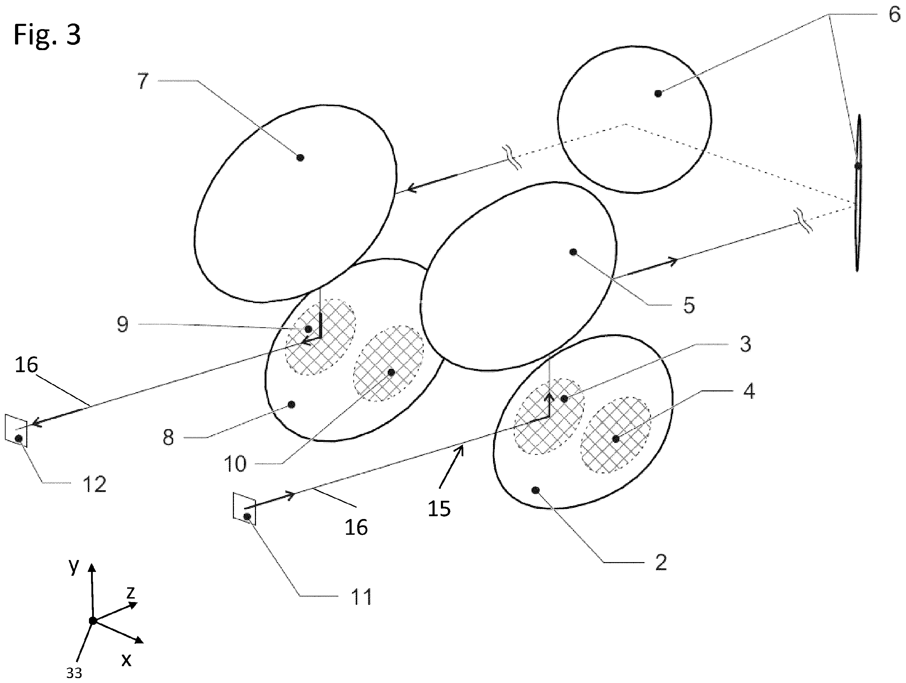

Figur 3 zeigt eine perspektivische Ansicht eines optischen Systems mit vier verschiebbaren Spiegelflächen 2, 5, 7, 8 und einer Umlenkeinheit 6. Die Umlenkeinheit 6 weist zwei Spiegelflächen auf. Die vier verschiebbaren Spiegelfläche und die Strahlumlenkeinheit 6 sind derart im Strahlengang 15 angeordnet, dass nacheinander eine erste verschiebbare Spiegelfläche 2, eine zweite verschiebbare Spiegelfläche 5, die Strahlumlenkeinheit 6, eine dritte verschiebbare Spiegelfläche 7 und eine vierte verschiebbare Spiegelfläche 8 im Strahlengang angeordnet sind.

Jede der vier verschiebbaren Spiegelflächen 2, 5, 7, 8 weist dabei zumindest zwei Funktionsbereiche auf. Beispielsweise weist die erste Spiegelfläche 2 einen ersten Funktionsbereich 3 und einen zweiten Funktionsbereich 4 auf. Die vierte verschiebbare Spiegelfläche weist beispielsweise einen ersten Funktionsbereich 9 und einen zweiten Funktionsbereich 10 auf. Die Funktionsbereiche 3, 4, 9, 10 der ersten 2 und vierten verschiebbaren Spiegelfläche 8 sind dabei derart ausgebildet, dass sie jeweils gemeinsam eine bestimmte endliche Brennweite bewirken. Die Funktionsbereiche der zweiten 5 und dritten verschiebbaren Spiegelfläche 7 sind dabei derart ausgebildet, dass sie jeweils gemeinsam eine bestimmte endliche Brennweite bewirken.

Die Funktionsbereiche können dabei derart ausgelegt werden, dass eine Bildebene und eine Objektebene unabhängig davon, ob die jeweils ersten Funktionsbereiche oder die jeweils zweiten Funktionsbereiche im Strahlengang angeordnet sind, konstant sind.

Es ist ebenso möglich den optischen Aufbau mit den oben beschriebenen Eigenschaften ohne eine Umlenkeinheit 6 oder mit einer anders ausgestalteten Umlenkeinheit zu realisieren.

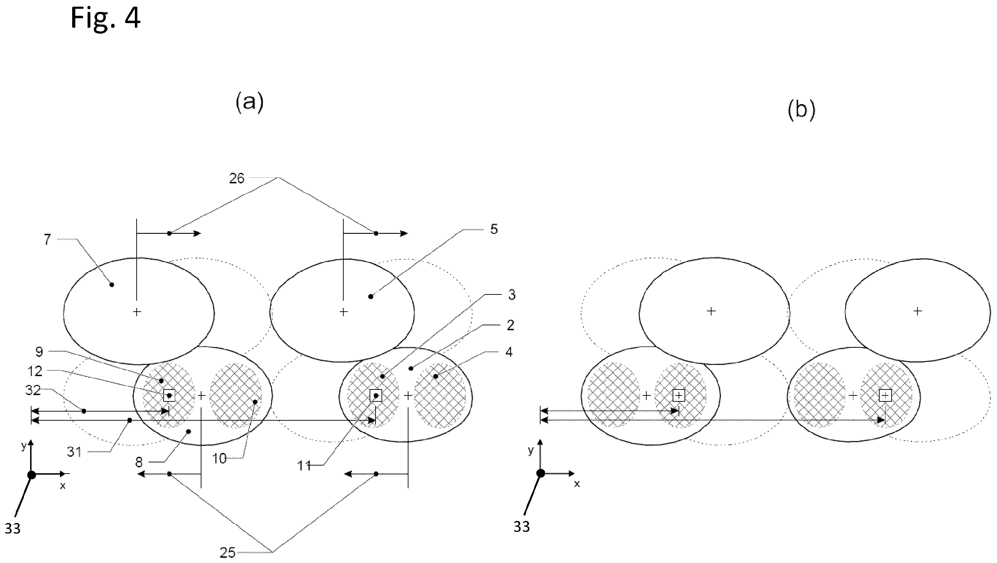

Figur 4 zeigt den Aufbau der Figur 3 in einer Frontalansicht. Die objektseitigen 16 bzw. bildseitigen Abschnitte 17 der optischen Achse stehen dabei senkrecht auf der Ansichtsebene. In Figur 4a ist der Aufbau mit den vier verschiebbaren Spiegelflächen 2, 5, 7, 8 in der jeweils ersten Position dargestellt, in denen die jeweils ersten Funktionsbereiche 3, 9 im Strahlengang 15 angeordnet sind. Figur 4b zeigt den Aufbau mit den vier verschiebbaren Spiegelflächen 2, 5, 7, 8 in den jeweils zweiten Positionen, in denen die jeweils zweiten Funktionsbereiche 4, 10 im Strahlengang 15 angeordnet sind. Die Verschiebung von der jeweils ersten in die jeweils zweite Verschiebposition erfolgt dabei für die erste und vierte verschiebbare Spiegelfläche 2,8 betragsgleich entlang einer ersten Richtung 25. Die Verschiebung von der jeweils ersten in die jeweils zweite Position erfolgt dabei für die zweite und dritte verschiebbare Spiegelfläche 5, 7 betragsgleich entlang einer zweiten Richtung 26. In Figur 4 sind die erste Richtung 25 und die zweite Richtung 26 entgegengesetzt. Weiter bleibt die Lage des objektseitigen Abschnitts der optischen Achse 16, also der Abstand 32 zu einem Ursprung 33 eines globalen Koordinatensystems, unabhängig von der Position konstant. Zudem bleibt die Lage des bildseitigen Abschnitts der optischen Achse 17, also der Abstand 31 zu dem Ursprung 33 eines globalen Koordinatensystems, unabhängig von der Position konstant.

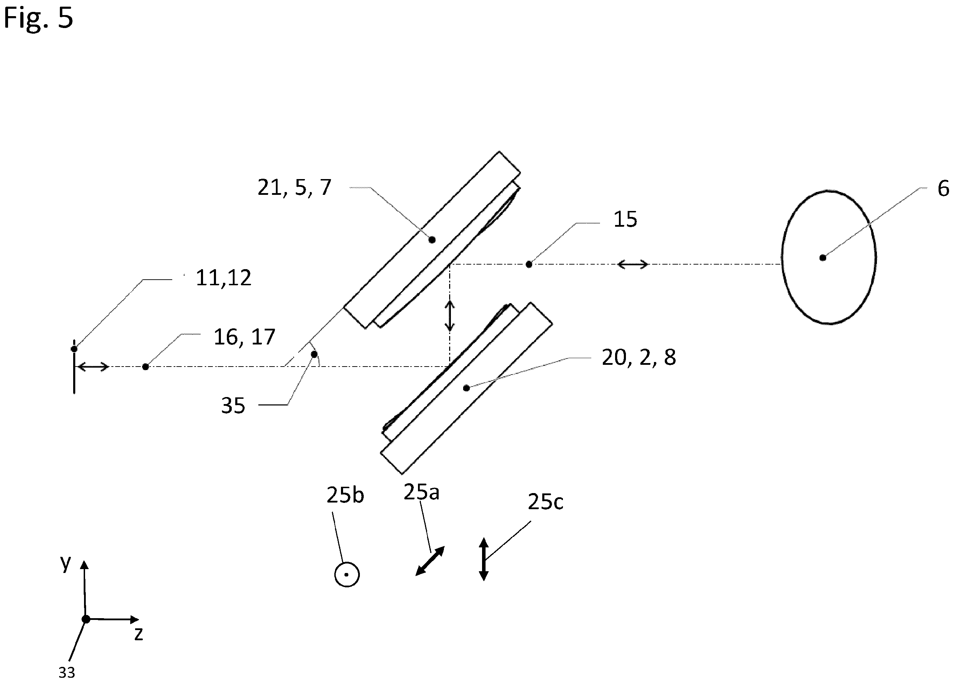

Figur 5 zeigt den Aufbau der Figuren 3 und 4 in einer Seitenansicht.

### Bezugszeichenliste:

- 1: optisches System
- 2: erste verschiebbare Spiegelfläche
- 3: erster Funktionsbereich der ersten verschiebbaren Spiegelfläche
- 4: zweiter Funktionsbereich der ersten verschiebbaren Spiegelfläche
- 5: zweite verschiebbare Spiegelfläche
- 6: Strahlumlenkeinheit
- 7: dritte verschiebbare Spiegelfläche
- 8: vierte verschiebbare Spiegelfläche
- 9: erster Funktionsbereich der vierten verschiebbaren Spiegelfläche
- 10: zweiter Funktionsbereich der vierten verschiebbaren Spiegelfläche
- 11: Objektebene
- 12: Bildebene
- 15: Strahlengang
- 16: objektseitiger Abschnitt der optischen Achse
- 17: bildseitiger Abschnitt der optischen Achse
- 20: (erstes) Substrat
- 21: zweites Substrat
- 25: Verschiebeweg
- 25a: erste Verschieberichtung
- 25b: zweite Verschieberichtung
- 25c: dritte Verschieberichtung
- 26: Verschiebeweg
- 31: Position bildseitige optische Achse
- 32: Position objektseitige optische Achse
- 33: Ursprung eines Koordinatensystems
- 35: Winkel zwischen optischer Achse und Spiegelfläche
- 36: Umlenkspiegel

## Patentansprüche

1. Reflektives optisches System (1) mit verstellbarer effektiver Brennweite, aufweisend
zumindest zwei verschiebbare Spiegelflächen (2, 8), die außeraxial und nacheinander entlang eines Strahlengangs (15) des optischen Systems (1) angeordnet sind und jeweils von einer ersten Verschiebeposition in eine zweite Verschiebeposition verschiebbar sind, wobei
- in der ersten Verschiebeposition jeweils erste Funktionsbereiche (3, 9) der verschiebbaren Spiegelflächen (2, 8) im Strahlengang (15) angeordnet sind, und die ersten Funktionsbereiche (3, 9) derart ausgebildet sind, dass sie gemeinsam eine erste endliche Brennweite bewirken; und
- in der zweiten Verschiebeposition jeweils zweite Funktionsbereiche (4, 10) der verschiebbaren Spiegelflächen (2, 8) im Strahlengang (15) angeordnet sind, und die zweiten Funktionsbereiche (4, 10) derart ausgebildet sind, dass sie gemeinsam eine zweite endliche Brennweite bewirken;
wobei die Spiegelflächen (2, 8) in jeder Verschiebeposition derart angeordnet sind, dass objekt- und bildseitige Abschnitte (16, 17) der optischen Achse des optischen Systems unabhängig von der Verschiebeposition jeweils feststehen.

2. Optisches System (1) nach dem vorangehenden Anspruch, wobei verschiebbare Spiegelflächen (2, 8), deren Funktionsbereiche (3, 4, 9, 10) gemeinsam eine Brennweite bewirken, gemeinsam auf einem einzigen Substrat (20) angeordnet sind, wobei das Substrat (20) gegenüber dem Strahlengang verschiebbar ist.

3. Optisches System (1) nach einem der vorangehenden Ansprüche, wobei die Spiegelflächen (2, 5, 7, 8) derart geformt und angeordnet sind, dass
zwei Lichtstrahlen, die durch einen von dem objektseitigen Abschnitt der optischen Achse (16) beabstandeten Objektpunkt in einer Objektebene (11) verlaufen, und unmittelbar anschließend durch das optische System (1) mit Spiegelflächen in der ersten Verschiebeposition verlaufen, einen Schnittpunkt in einem ersten Bildpunkt in einer Bildebene (12) aufweisen; und
zwei Lichtstrahlen, die durch den gleichen von dem objektseitigen Abschnitt der optischen Achse (16) beabstandeten Objektpunkt in der Objektebene (11) verlaufen, und unmittelbar anschließend durch das optische System (1) mit Spiegelflächen in der zweiten Verschiebeposition verlaufen, einen Schnittpunkt in einem zweiten Bildpunkt in der Bildebene (12) aufweisen.

4. Optisches System (1) nach einem der vorangehenden Ansprüche, aufweisend vier verschiebbare Spiegelflächen (2, 5, 7, 8) und eine Strahlumlenkeinheit (6),
wobei die erste (2) und die vierte verschiebbare Spiegelfläche (8) gemeinsam auf einem ersten Substrat (20) angeordnet sind, und die zweite (5) und die dritte verschiebbare Spiegelfläche (7) gemeinsam auf einem zweiten Substrat (21) angeordnet sind,
wobei nacheinander die erste verschiebbare Spiegelfläche (2), die zweite verschiebbare Spiegelfläche (5), die Strahlumlenkeinheit (6), die dritte verschiebbare Spiegelfläche (7) und die vierte verschiebbare Spiegelfläche (9) im Strahlengang (15) angeordnet sind,
wobei die erste (2) und die vierte verschiebbare Spiegelfläche (8) Funktionsbereiche (3, 4, 9, 10) aufweisen, die jeweils gemeinsam bestimmte Brennweiten bewirken, und die zweite (5) und die dritte verschiebbare Spiegelfläche (7) Funktionsbereiche aufweisen, die jeweils gemeinsam bestimmte Brennweiten bewirken.

5. Optisches System (1) nach einem der vorangehenden Ansprüche, wobei jede Spiegelfläche einen Winkel von 45° mit der optischen Achse einschließt.

6. Optisches System nach einem der vorangehenden Ansprüche, wobei ein Verschiebeweg, entlang dem eine verschiebbare Spiegelfläche von der ersten in die zweite Verschiebeposition verschiebbar ist, linear und vorzugsweise entlang einer Richtung verläuft, die innerhalb jener verschiebbaren Spiegelfläche liegt, und/oder orthogonal zur optischen Achse ist.

7. Optisches System nach einem der vorhergehenden Ansprüche, wobei Verschiebewege, entlang derer zwei verschiebbare Spiegelflächen, die gemeinsam eine Brennweite bewirken, von der ersten in die zweite Verschiebeposition verschiebbar sind, gleichgerichtet und/oder betragsgleich sind.

8. Optisches System nach einem der vorangehenden Ansprüche, wobei zumindest eine der Spiegelflächen als Freiform ausgestaltet ist, die durch eine Basisbeschreibung, insbesondere sphärisch, elliptisch, asphärisch, parabolisch oder hyperbolisch, mit Termen höherer Ordnung, insbesondere Zernike-Polynome, beschreibbar ist.

9. Optisches System nach einem der vorangehenden Ansprüche, wobei zumindest eine der Spiegelflächen eine Apertur aufweist, die als Referenz für eine Kontrolle der Position und Lage der Spiegelflächen zueinander nutzbar ist.

10. Optisches System nach einem der vorangehenden Ansprüche, wobei mindestens eine optische Referenz auf zumindest einer der verschiebbaren Spiegelflächen oder zumindest einem Substrat angeordnet ist.

11. Optisches System nach einem der vorangehenden Ansprüche, wobei an zumindest einer der verschiebbaren Spiegelflächen oder zumindest einem Substrat eine mechanische Referenz und/oder Anlagestruktur in montierter oder angearbeiteter Weise angeordnet ist.

12. Optisches System nach einem der vorangehenden Ansprüche, wobei die Reflektivität der Spiegelflächen für Licht mit einer Wellenlänge zwischen 400 nm und 800 nm größer als 50%, besonders vorteilhaft größer als 75 %, ganz besonders vorteilhaft größer als 90 % ist.

13. Optischer Aufbau, aufweisend ein optisches System nach den vorangehenden Ansprüchen und zumindest ein abbildendes optisches System, insbesondere ein Teleskop oder ein Mikroskop, wobei das optische System in das abbildende optische System integriert ist oder dem abbildenden optischen System vor- oder nachgeschaltet ist.

## Claims

1. A reflective optical system (1) with an adjustable effective focal length, comprising
at least two displaceable mirror surfaces (2, 8) which are arranged off-axis and successively along a beam path (15) of the optical system (1) and can each be displaced from a first displacement position to a second displacement position, wherein,
- first functional areas (3, 9) in the first displacement position of the displaceable mirror surfaces (2, 8) is arranged in the beam path (15), and the first functional areas (3, 9) are configured such that they together effectuate a first finite focal length; and
- second functional areas (4, 10) in the second displacement position of the displaceable mirror surfaces (2, 8) are arranged in the beam path (15), and the second functional areas (4, 10) are configured such that they together effectuate a second finite focal length;
wherein the mirror surfaces (2, 8) are arranged in each displacement position such that the object- and image-side sections (16, 17) of the optical system's optical axis are fixed independently of the displacement position.

2. The optical system (1) according to the preceding claim, wherein displaceable mirror surfaces (2, 8), whose functional areas (3, 4, 9, 10) together produce a focal length, are arranged together on a single substrate (20), the substrate (20) being displaceable relative to the beam path.

3. The optical system (1) according to any one of the preceding claims, wherein the mirror surfaces (2, 5, 7, 8) are shaped and arranged such that
two light beams, which pass through an object point in an object plane (11) spaced apart from the object-side section of the optical axis (16) and immediately afterwards pass through the optical system (1) with mirror surfaces in the first displacement position, having an intersection point in a first image point in an image plane (12); and
two light beams, which pass through the same object point in the object plane (11) spaced apart from the object-side section of the optical axis (16) and immediately afterwards pass through the optical system (1) with mirror surfaces in the second displacement position, having an intersection point in a second image point in the image plane (12).

4. The optical system (1) according to any one of the preceding claims, comprising four displaceable mirror surfaces (2, 5, 7, 8) and a beam deflection unit (6),
wherein the first (2) and fourth displaceable mirror surfaces (8) are arranged together on a first substrate (20), and the second (5) and third displaceable mirror surfaces (7) are arranged together on a second substrate (21),
wherein the first displaceable mirror surface (2), the second displaceable mirror surface (5), the beam deflection unit (6), the third displaceable mirror surface (7) and the fourth displaceable mirror surface (9) are arranged successively in the beam path (15),
wherein the first (2) and the fourth displaceable mirror surfaces (8) have functional areas (3, 4, 9, 10) which each together produce specific focal lengths, and the second (5) and the third displaceable mirror surfaces (7) have functional areas which each jointly produce specific focal lengths.

5. The optical system (1) according to any one of the preceding claims, wherein each mirror surface forms an angle of 45° with the optical axis.

6. The optical system according to any one of the preceding claims, wherein a displacement path, along which a displaceable mirror surface can be displaced from the first to the second displacement position, passes linearly and preferably along a direction lying within that displaceable mirror surface and/or is orthogonal to the optical axis.

7. The optical system according to any one of the preceding claims, wherein displacement paths along which two displaceable mirror surfaces, which together produce a focal length, can be displaced from the first to the second displacement position are aligned and/or equal in length.

8. The optical system according to any one of the preceding claims, wherein at least one of the mirror surfaces is designed as a free form which is writable by a basic specification, in particular spherical, elliptical, aspherical, parabolic or hyperbolic, with higher-order terms, in particular Zernike polynomials.

9. The optical system according to any one of the preceding claims, wherein at least one of the mirror surfaces has an aperture that can be used as a reference to control the mirror surfaces' position and orientation relative to each other.

10. The optical system according to any one of the preceding claims, wherein at least one optical reference is arranged on at least one of the displaceable mirror surfaces or at least one substrate.

11. The optical system according to any one of the preceding claims, wherein a mechanical reference and/or support structure is mounted or machined on at least one of the displaceable mirror surfaces or at least one substrate.

12. The optical system according to any one of the preceding claims, wherein the mirror surfaces' reflectivity of light with a wavelength between 400 nm and 800 nm is greater than 50%, particularly advantageously greater than 75%, and most particularly advantageously greater than 90%.

13. The optical structure comprising an optical system according to the preceding claims and at least one imaging optical system, particularly a telescope or a microscope, wherein the optical system is integrated into the imaging optical system or is connected upstream or downstream of the imaging optical system.

## Revendications

1. Système optique réfléchissant (1) avec une distance focale effective réglable, comprenant
au moins deux surfaces de miroir (2, 8) déplaçables qui sont agencées hors axe et l'une après l'autre le long d'un trajet de faisceau (15) du système optique (1) et qui peuvent respectivement être déplacées d'une première position de déplacement jusqu'à une seconde position de déplacement, dans lequel
- dans la première position de déplacement, des premières régions fonctionnelles (3, 9) des surfaces de miroir (2, 8) déplaçables sont agencées sur le trajet de faisceau (15) et les premières régions fonctionnelles (3, 9) sont conçues de manière à induire ensemble une première distance focale finie ; et
- dans la seconde position de déplacement, des secondes régions fonctionnelles (4, 10) des surfaces de miroir (2, 8) déplaçables sont agencées sur le trajet de faisceau (15) et les secondes régions fonctionnelles (4, 10) sont conçues de manière à induire ensemble une seconde distance focale finie ;
dans lequel les surfaces de miroir (2, 8) sont agencées dans chaque position de déplacement de telle manière que des sections (16, 17), situées côté objet et côté image, de l'axe optique du système optique sont respectivement fixes indépendamment de la position de déplacement.

2. Système optique (1) selon la revendication précédente, dans lequel des surfaces de miroir (2, 8) déplaçables, dont les régions fonctionnelles (3, 4, 9, 10) induisent ensemble une distance focale, sont agencées ensemble sur un seul substrat (20), dans lequel le substrat (20) peut être déplacé par rapport au trajet de faisceau.

3. Système optique (1) selon l'une quelconque des revendications précédentes, dans lequel les surfaces de miroir (2, 5, 7, 8) sont formées et agencées de telle manière que
deux faisceaux lumineux, qui s'étendent dans un plan d'objet (11) en passant par un point d'objet distant de la section, située côté objet, de l'axe optique (16) et qui traversent immédiatement ensuite le système optique (1) avec des surfaces de miroir dans la première position de déplacement, présentent un point d'intersection dans un premier point d'image d'un plan d'image (12) ; et
deux faisceaux lumineux, qui s'étendent dans le plan d'objet (11) en passant par le point d'objet distant de la section, située côté objet, de l'axe optique (16) et qui traversent immédiatement ensuite le système optique (1) avec des surfaces de miroir dans la seconde position de déplacement, présentent un point d'intersection dans un second point d'image du plan d'image (12).

4. Système optique (1) selon l'une quelconque des revendications précédentes, présentant quatre surfaces de miroir (2, 5, 7, 8) déplaçables et une unité de déviation de faisceau (6),
dans lequel la première (2) et la quatrième surface de miroir (8) déplaçable sont agencées ensemble sur un premier substrat (20), et la deuxième (5) et la troisième surface de miroir (7) déplaçable sont agencées ensemble sur un second substrat (21),
dans lequel la première surface de miroir (2) déplaçable, la deuxième surface de miroir (5) déplaçable, l'unité de déviation de faisceau (6), la troisième surface de miroir (7) déplaçable et la quatrième surface de miroir (9) déplaçable sont agencées sur le trajet de faisceau (15),
dans lequel la première (2) et la quatrième surface de miroir (8) déplaçable présentent des régions fonctionnelles (3, 4, 9, 10) qui induisent respectivement ensemble certaines distances focales, et la deuxième (5) et la troisième surface de miroir (7) déplaçable présentent des régions fonctionnelles qui induisent respectivement ensemble certaines distances focales.

5. Système optique (1) selon l'une quelconque des revendications précédentes, dans lequel chaque surface de miroir forme un angle de 45° avec l'axe optique.

6. Système optique selon l'une quelconque des revendications précédentes, dans lequel un trajet de déplacement le long duquel une surface de miroir déplaçable peut être déplacée de la première jusqu'à la seconde position de déplacement est linéaire et s'étend de manière préférée le long d'une direction qui se trouve à l'intérieur de ladite surface de miroir déplaçable et/ou est orthogonale par rapport à l'axe optique.

7. Système optique selon l'une quelconque des revendications précédentes, dans lequel les voies de déplacement le long desquelles deux surfaces de miroir déplaçables induisant ensemble une distance focale peuvent être déplacées de la première jusqu'à la seconde position de déplacement sont orientées de la même manière et/ou de même valeur.

8. Système optique selon l'une quelconque des revendications précédentes, dans lequel au moins une des surfaces de miroir est d'une forme libre pouvant être décrite grâce à une description basique, en particulier comme étant sphérique, elliptique, asphérique, parabolique ou hyperbolique, avec des termes d'ordre supérieur, en particulier des polynômes de Zernike.

9. Système optique selon l'une quelconque des revendications précédentes, dans lequel au moins une des surfaces de miroir présente une ouverture qui peut être utilisée comme référence pour un contrôle de la position et de l'emplacement des surfaces de miroir les unes par rapport aux autres.

10. Système optique selon l'une quelconque des revendications précédentes, dans lequel au moins une référence optique est agencée sur au moins une des surfaces de miroir déplaçables ou sur au moins un substrat.

11. Système optique selon l'une quelconque des revendications précédentes, dans lequel une référence mécanique et/ou une structure d'installation est agencée de manière montée ou usinée sur au moins une des surfaces de miroir déplaçables ou sur au moins un substrat.

12. Système optique selon l'une quelconque des revendications précédentes, dans lequel la réflectivité des surfaces de miroir pour une lumière ayant une longueur d'onde comprise entre 400 nm et 800 nm est supérieure à 50 %, de manière particulièrement avantageuse supérieure à 75 %, de manière tout particulièrement avantageuse supérieure à 90 %.

13. Structure optique, présentant un système optique selon les revendications précédentes et au moins un système optique d'imagerie, en particulier un télescope ou un microscope, dans lequel le système optique est intégré dans le système optique d'imagerie ou est placé en amont ou en aval du système optique d'imagerie.
